# FASCICULE DE BREVET EUROPEEN

(11) **EP 1 478 860 B1**
(45) Date de publication et mention de la délivrance du brevet: **01.02.2006**
(21) Numéro de dépôt: 03717416.6
(22) Date de dépôt: 20.02.2003
(51) Int. Cl.: F16B 7/00

(54) **PROCEDE DE FIXATION D'UNE PIECE ANNULAIRE D'ACCOUPLEMENT EN MATERIAU ELASTOMERIQUE ENTRE DEUX TUBES EMBOITES L'UN DANS L'AUTRE, ET ENSEMBLE OBTENU PAR LE PROCEDE**
VERFAHREN ZUM BEFESTIGEN EINES AUS ELASTOMEREM MATERIAL BESTEHENDEN RINGFÖRMIGEN KUPPLUNGSTEILS ZWISCHEN ZWEI INEINANDERGESTECKTEN ROHREN UND SICH AUS DEM VERFAHREN AUSGEBENDE ANORDNUNG
METHOD OF FIXING AN ANNULAR ELASTOMERIC COUPLING BETWEEN TWO TUBES WHICH ARE MOUNTED ONE INSIDE THE OTHER AND ASSEMBLY THUS OBTAINED

(30) Priorité: 25.02.2002 FR 0202382
(43) Date de publication de la demande: 24.11.2004
(73) Titulaire: Societe de Technologie Michelin, 63000 Clermont-Ferrand (FR); MICHELIN RECHERCHE ET TECHNIQUE S.A., 1763 Granges-Paccot (CH)
(72) Inventeur: GAUTHERON, Michel, F-58000 Nevers (FR); LEFEBVRE, Serge, F-63000 Clermont-Ferrand (FR)
(74) Mandataire: Laget, Jean-Loup
(86) Numéro de dépôt international: PCT/FR2003/000561
(87) Numéro de publication internationale: WO 2003/072960

(56) Documents cités:
- EP-A1- 0 524 843
- EP-A1- 0 763 686
- EP-A2- 1 036 680
- WO-A1-01/70527
- FR-A1- 2 349 466
- FR-A1- 2 398 955
- FR-A1- 2 474 903
- FR-A1- 2 637 334
- FR-A5- 2 142 171

## Description

La présente invention concerne un procédé de fixation d'une pièce annulaire d'accouplement en matériau élastomérique entre deux tubes emboîtés l'un dans l'autre, ainsi qu'un ensemble obtenu par ledit procédé.

Un tel ensemble est couramment utilisé par exemple dans un dispositif d'articulation et de suspension pour un bras de roue d'un véhicule, ou encore dans un dispositif anti-roulis pour une suspension de véhicule, en particulier pour former une traverse anti-roulis dans un essieu de véhicule (voir par exemple les documents WO 97/47486 et WO 01/70527).

Dans le document WO 97/47486, chaque pièce annulaire d'accouplement, encore appelée articulation élastique, qu'elle soit utilisée dans un dispositif d'articulation pour un bras de roue ou qu'elle soit utilisée pour accoupler les tubes intérieur et extérieur de la traverse anti-roulis, est constituée par une pièce préfabriquée comportant une partie active, telle qu'une bague en un matériau élastomérique, de forme générale cylindrique creuse, qui est disposée entre deux bagues métalliques, coaxiales ou sensiblement coaxiales, l'une interne et l'autre externe, encore appelées viroles ou armatures. La bague en matériau élastomérique est liée aux deux bagues métalliques par une technique dite d'adhérisation. Plus précisément, la bague en matériau élastomérique est formée par moulage par injection du matériau élastomérique entre les deux bagues métalliques, qui sont utilisées comme éléments de moule interne et externe, le moule étant complété par deux autres éléments de moule destinés à donner la forme désirée aux deux faces d'extrémité frontale de la bague en matériau élastomérique. L'ensemble est soumis à une opération de cuisson ou vulcanisation, au cours de laquelle il se produit une liaison élastomère/métal entre la bague en matériau élastomérique et les deux bagues métalliques, dont les surfaces en contact avec le matériau élastomérique avaient été convenablement apprêtées avant l'opération de moulage par injection. On obtient ainsi entre la bague en matériau élastomérique et les deux bagues métalliques des liaisons aptes à empêcher, en service, tout glissement relatif, en translation comme en rotation, entre les trois bagues.

L'assemblage des deux tubes avec la ou les pièces d'accouplement s'effectue de la manière suivante. On emmanche tout d'abord, à force, la ou les pièces d'accouplement autour du tube intérieur, de petit diamètre extérieur, de sorte que la ou les pièces d'accouplement soient fixées, par leur bague métallique intérieure, au tube intérieur dans la position désirée sur la surface extérieure de celui-ci. Ensuite, la partie du tube intérieur qui porte la ou les pièces d'accouplement est introduite en force dans le tube extérieur, de grand diamètre, jusqu'à ce que la ou les pièces d'accouplement atteignent une position désirée dans le tube extérieur. Un tel mode d'assemblage nécessite une précision élevée de fabrication des tubes et présente un certain nombre de difficultés, car plusieurs impératifs doivent être respectés :
- un premier impératif est que la partie active en matériau élastomérique de la ou des pièces d'accouplement ne doit pas être cisaillée lors de l'emmanchement du tube intérieur dans le tube extérieur ; cela impose que la bague métallique extérieure de la ou des pièces d'accouplement soit soutenue axialement pendant l'opération d'emmanchement et/ou que le diamètre extérieur de ladite bague métallique extérieure et le diamètre intérieur du tube extérieur soient tels que l'opération d'emmanchement puisse être effectuée sans que des efforts axiaux excessifs soient transmis par ladite bague métallique extérieure à la partie active en matériau élastomérique de la ou des pièces d'accouplement ;
- un second impératif est que la partie active en matériau élastomérique de la ou des pièces d'accouplement ne doit pas être soumise à des températures trop élevées qui pourraient dégrader ses propriétés ou ses dimensions ; en pratique, cela interdit de chauffer fortement le tube extérieur en vue de l'expanser radialement par dilatation thermique pour faciliter l'opération d'emmanchement ;
- un troisième impératif est que les liaisons par frottement entre les bagues métalliques extérieure et intérieure de la ou des pièces d'accouplement et les tubes extérieur et intérieur doivent être capables, en service, de permettre la transmission d'efforts cycliques élevés, sans qu'il en résulte un glissement relatif, en translation ou en rotation, entre ladite bague métallique extérieure et le tube extérieur ou entre ladite bague métallique intérieure et le tube intérieur ; cela impose notamment que le diamètre extérieur de ladite bague métallique extérieure et le diamètre intérieur du tube extérieur soient tels que, après l'opération d'emmanchement, le tube extérieur enserre fermement ladite bague métallique extérieure. Ce dernier impératif est manifestement difficile à concilier avec le premier impératif selon lequel l'opération d'emmanchement doit être effectuée sans cisailler la partie active en matériau élastomérique de la ou des pièces d'accouplement.

Le premier impératif est particulièrement difficile à respecter lorsque les deux tubes doivent être accouplés par deux pièces d'accouplement espacées axialement l'une de l'autre, comme cela est usuellement le cas pour une traverse anti-roulis. En effet, en pratique, comme montré dans le document WO 97/47486, une des extrémités du tube extérieur de la traverse anti-roulis est rétrécie pour pouvoir être plus commodément fixée au bras de roue. Il en résulte que les deux pièces d'accouplement ne peuvent être introduites dans le tube extérieur que par l'autre extrémité de celui-ci. Dans ces conditions, pendant une première partie de l'opération d'emmanchement, la pièce d'accouplement introduite en premier dans le tube extérieur peut être soutenue axialement et maintenue en position par rapport au tube intérieur, mais, dès que la seconde pièce d'accouplement est introduite dans le tube extérieur, la première pièce d'accouplement ne peut plus être soutenue et maintenue en position, car elle devient inaccessible et elle est alors soumise à des efforts de cisaillement lorsque l'opération d'emmanchement est poursuivie jusqu'à ce que la seconde pièce d'accouplement atteigne la position désirée dans le tube extérieur.

Dans le document WO 01/70527, chacune des deux pièces d'accouplement ou articulations est formée par une bague en matériau élastomérique, dont les surfaces périphériques intérieure et extérieure sont liées respectivement à la surface périphérique extérieure du tube intérieur et à la surface périphérique intérieure du tube extérieur de la traverse anti-roulis par adhérisation, c'est-à-dire par une technique semblable à celle décrite plus haut à propos de la fabrication des pièces d'accouplement comportant une partie active en matériau élastomérique et deux bagues métalliques ou viroles ou armatures, respectivement intérieure et extérieure. Par rapport au mode de réalisation décrit dans le document WO 97/47486, le mode de réalisation décrit dans le document WO 01/70527 présente des avantages économiques en ce sens que les bagues métalliques intérieure et extérieure des deux pièces d'accouplement sont supprimées, ce qui procure aussi un gain de poids, et en ce sens que les tolérances de fabrication des tubes intérieur et extérieur sont plus larges, car on effectue ici un assemblage métal/élastomère, et non plus un assemblage métal/métal. Cependant, la fixation par adhérisation des deux pièces d'accouplement ou articulations entre le tube intérieur et le tube extérieur de la traverse anti-roulis est relativement compliquée à mettre en oeuvre, car le moulage et la vulcanisation in situ des deux pièces d'accouplement entre les deux tubes sont relativement complexes.

Le document FR-A-2 637 334 concerne un élément de transmission d'un couple et assurant l'absorption des vibrations, et elle concerne plus particulièrement les arbres de colonne de direction. L'élément de transmission décrit dans ce document comprend deux tronçons d'arbres coaxiaux, l'un intérieur, l'autre extérieur, qui sont reliés l'un à l'autre par un manchon élastique (pièce annulaire d'accouplement en matériau élastomérique). Ce document indique que la liaison entre le manchon élastique et les deux tronçons d'arbres peut être obtenue par compression radiale ou par moulage ou encore par collage du manchon élastique sans entrer dans les détails de ces trois techniques de liaison et sans envisager de les combiner d'une quelconque manière. En fait, l'invention décrite dans ce document se préoccupe surtout de créer sur les tronçons d'arbres des butées mécaniques permettant la transmission directe du couple d'un tronçon d'arbre à l'autre quand les butées viennent mutuellement en contact l'une avec l'autre au delà d'un certain angle de rotation d'un tronçon d'arbre par rapport à l'autre.

Le document FR-A-2 349 466 concerne un dispositif d'articulation élastique et de suspension comprenant deux manchons ou tubes coaxiaux, l'un intérieur, l'autre extérieur, qui sont reliés l'un à l'autre par un élément tubulaire en matière élastomère (pièce annulaire d'accouplement en matériau élastomérique). Dans un mode de réalisation, ce document enseigne de lier l'élément tubulaire en matière élastomère de la suspension aux deux manchons respectivement interne et externe en pré-fabriquant tout d'abord l'élément tubulaire en matière élastomère par moulage, de telle façon qu'il ait une épaisseur de paroi plus grande que l'espace entre les deux manchons, puis en encollant les surfaces des éléments qui sont à joindre, avec une colle appropriée, en particulier une colle activable par la chaleur, puis en emboîtant à force l'élément tubulaire en matière élastomère jusqu'à l'emplacement désiré entre les deux manchons, et enfin en chauffant l'ensemble pour activer la colle.

La présente invention a donc pour but de fournir une autre solution pour la fixation d'au moins une pièce annulaire d'accouplement en matériau élastomérique entre deux tubes, respectivement intérieur et extérieur, qui permette à la fois de simplifier les opérations d'assemblage et de réduire le prix de revient du produit final.

Subsidiairement, l'invention a pour but de fournir un ensemble composé de deux tubes, respectivement intérieur et extérieur, accouplés l'un à l'autre par au moins une pièce annulaire d'accouplement en matériau élastomérique, dans lequel, si on le désire, la pièce annulaire d'accouplement en matériau élastomérique est soumise à une précontrainte en compression.

La présente invention a donc pour objet un procédé de fixation d'au moins une pièce annulaire d'accouplement en matériau élastomérique entre un tube extérieur et un tube intérieur disposés l'un dans l'autre, le tube extérieur ayant un diamètre intérieur d'une première valeur et le tube intérieur ayant un diamètre extérieur d'une seconde valeur plus petite que la première valeur, caractérisé par les étapes consistant :
a) à former en tant que pièce annulaire d'accouplement, une bague comportant des régions annulaires, extérieure et intérieure, entièrement en matériau élastomérique, la région annulaire extérieure ayant un diamètre extérieur plus petit que la première valeur ;
b) à encoller au moins une surface parmi une première paire de surfaces à joindre comprenant la surface périphérique intérieure du tube extérieur et la surface périphérique extérieure de ladite région annulaire extérieure de la bague ;
c) à enfiler le tube intérieur, portant la bague, et le tube extérieur l'un dans l'autre jusqu'à ce que la bague soit positionnée à un emplacement désiré le long de la surface périphérique intérieure dudit tube extérieur ; et
d) à soumettre au moins un desdits tubes intérieur et extérieur à une déformation plastique radiale, sur toute la circonférence du tube soumis à déformation, la déformation étant effectuée dans un sens propre à appliquer fermement l'une contre l'autre les surfaces à joindre de ladite première paire de surfaces.

Ainsi, par un choix approprié du diamètre extérieur de la pièce annulaire d'accouplement en matériau élastomérique, il est possible de faire en sorte que ladite pièce annulaire d'accouplement ne soit soumise à aucun effort de cisaillement lorsque le tube intérieur, portant la pièce annulaire d'accouplement, et le tube extérieur sont enfilés l'un dans l'autre. En outre, comme la pièce annulaire d'accouplement ne comporte aucune bague métallique extérieure ou intérieure, non seulement on réalise des économies de pièces détachées et de poids, mais en outre les tolérances de fabrication des tubes peuvent être larges.

La déformation plastique radiale de l'un des deux tubes ou des deux tubes peut être effectuée de manière simple en soumettant le tube intérieur à une opération de dudgeonnage et/ou en soumettant le tube extérieur à une opération de rétreint. La déformation peut être effectuée en quantité suffisante pour soumettre le matériau élastomérique de la pièce annulaire d'accouplement à un taux de compression prédéfini. Ainsi, en expansant le tube intérieur de façon plus ou moins importante et/ou en provoquant un rétreint plus ou moins important du tube extérieur, il est possible d'ajuster le taux de compression du matériau élastomérique de la pièce annulaire d'accouplement à la valeur désirée, par exemple afin d'obtenir un bon compromis entre la raideur et l'endurance de la pièce annulaire d'accouplement.

Bien que l'opération de dudgeonnage du tube intérieur et/ou l'opération de rétreint du tube extérieur pourraient être effectuées en faisant passer un outil approprié de dudgeonnage (olive) à l'intérieur du tube intérieur, sur toute la longueur de celui-ci, et/ou en faisant passer le tube extérieur dans une matrice appropriée, l'opération de dudgeonnage et/ou l'opération de rétreint sont de préférence effectuées localement sur le tube intérieur et/ou sur le tube extérieur dans la zone du ou des tubes qui est située en correspondance avec la pièce annulaire d'accouplement. Ceci peut être effectué par exemple à l'aide d'outils appropriés comportant plusieurs secteurs qui sont positionnés à l'emplacement approprié à l'intérieur du tube intérieur ou autour du tube extérieur et qui peuvent être forcés à se déplacer radialement, vers l'extérieur ou vers l'intérieur selon le cas, au moyen d'un organe de commande approprié.

Dans un premier mode de réalisation du procédé selon l'invention, le procédé consiste en outre en ce que :
- dans l'étape a), la région annulaire intérieure de la bague est formée de manière à avoir un diamètre intérieur plus grand que la seconde valeur ;
- dans l'étape b), une colle est appliquée aussi sur au moins une surface parmi une seconde paire de surfaces à joindre comprenant la surface périphérique extérieure du tube intérieur et la surface périphérique intérieure de ladite région annulaire intérieure de la bague ;
- après l'étape b) et avant l'étape c), le tube intérieur et la bague sont enfilés l'un dans l'autre jusqu'à ce que la bague soit positionnée à un emplacement désiré sur la surface périphérique extérieure dudit tube intérieur.

De préférence, préalablement à l'étape b), les surfaces périphériques intérieure et extérieure de la bague sont préparées par une opération de rectification à la meule pour donner auxdites surfaces périphériques un état de surface apte à assurer une bonne adhérence de la colle utilisée dans l'étape b). En cas de besoin, cette opération de rectification à la meule permet aussi de donner à la bague des diamètres intérieur et extérieur ayant les valeurs désirées.

De préférence, après l'étape d'enfilage et de positionnement de la pièce annulaire d'accouplement à l'emplacement désiré sur le tube intérieur, et préalablement à l'étape d'enfilage du tube intérieur portant la pièce annulaire d'accouplement dans le tube extérieur, le tube intérieur est soumis à une opération de dudgeonnage pour faire adhérer la pièce annulaire d'accouplement et le tube intérieur l'un à l'autre. On évite ainsi que, lors de l'étape suivante d'enfilage du tube intérieur portant la pièce annulaire d'accouplement dans le tube extérieur, ladite pièce annulaire d'accouplement soit déplacée accidentellement par le tube extérieur et n'occupe plus l'emplacement désiré sur le tube intérieur.

De préférence, l'opération de dudgeonnage est effectuée localement en correspondance avec ladite bague.

Dans un second mode de réalisation du procédé selon l'invention, l'étape a) de formation de ladite bague consiste à mouler, vulcaniser et adhériser, en une seule opération, ladite bague directement sur la surface périphérique extérieure du tube intérieur.

De préférence, préalablement à l'étape b), la surface périphérique extérieure de la bague est préparée par une opération de rectification à la meule pour donner à ladite surface périphérique extérieure de la bague un état de surface apte à assurer une bonne adhérence de la colle utilisée dans l'étape b). En cas de besoin, cette opération de rectification à la meule permet aussi de donner à la bague un diamètre extérieur désiré.

Dans les premier et second modes de réalisation, de préférence, préalablement à l'étape d'encollage, les tubes intérieur et extérieur sont soumis à un traitement de surface contre la corrosion.

Dans un mode de réalisation, la pièce annulaire d'accouplement peut être entièrement faite d'un matériau élastomérique. Dans ce cas, pour la fixation de la pièce annulaire d'accouplement aux deux tubes, il suffit de déformer radialement l'un des deux tubes sur toute sa circonférence. Par exemple, le tube intérieur peut être dudgeonné (expansé radialement) en une ou plusieurs passes, d'une quantité suffisante pour que sa surface périphérique extérieure soit appliquée fermement contre la surface périphérique intérieure de la pièce annulaire d'accouplement et que, par expansion du matériau élastomérique de ladite pièce annulaire d'accouplement, la surface périphérique extérieure de celle-ci soit appliquée fermement contre la surface périphérique intérieure du tube extérieur. En variante, le tube extérieur peut être rétreint radialement, en une ou plusieurs passes, d'une quantité suffisante pour que sa surface périphérique intérieure soit appliquée fermement contre la surface périphérique extérieure de la pièce annulaire d'accouplement et que, par compression du matériau élastomérique de ladite pièce annulaire d'accouplement, la surface périphérique intérieure de celle-ci soit appliquée fermement contre la surface périphérique extérieure du tube intérieur. Bien entendu, dans ce mode de réalisation, il est aussi possible de soumettre le tube intérieur à une opération de dudgeonnage et le tube extérieur à une opération de rétreint.

Dans un autre mode de réalisation, dans l'étape de formation de la pièce annulaire d'accouplement, au moins une armature peut être noyée dans le matériau élastomérique de la pièce annulaire d'accouplement, entre des régions annulaires extérieure et intérieure de celle-ci. Dans ce cas, les régions annulaires intérieure et extérieure de la pièce d'accouplement peuvent être réalisées dans le même matériau élastomérique ou, si on le désire, dans des matériaux élastomériques différents. Dans ce mode de réalisation, pour la fixation de la pièce annulaire d'accouplement comportant au moins une armature interne noyée dans le matériau élastomérique, le tube intérieur doit être soumis à une opération de dudgeonnage et le tube extérieur doit être soumis à une opération de rétreint.

Avantageusement, on peut utiliser une colle à base de cyanoacrylate pour l'étape d'encollage susmentionnée.

La présente invention a également pour objet un ensemble comprenant un tube extérieur et un tube intérieur disposés au moins partiellement l'un dans l'autre et accouplés l'un à l'autre par au moins une pièce annulaire d'accouplement en matériau élastomérique, qui est fixée à la surface périphérique intérieure du tube extérieur et à la surface périphérique extérieure du tube intérieur par des liaisons empêchant tout glissement relatif entre ladite pièce annulaire d'accouplement et lesdits tubes intérieur et extérieur, caractérisé en ce que ladite pièce annulaire d'accouplement est fixée aux deux tubes par le procédé selon l'invention.

Dans un mode de réalisation, dans lequel on utilise des tubes intérieur et extérieur relativement courts, l'ensemble selon l'invention peut faire partie d'un dispositif d'articulation et de suspension élastique pour un bras de roue de véhicule.

Dans un autre mode de réalisation, dans lequel on utilise des tubes intérieur et extérieur relativement plus longs que dans le mode de réalisation précédent, l'ensemble selon l'invention peut faire partie d'un dispositif anti-roulis pour une suspension de véhicule. En particulier, l'ensemble selon l'invention peut constituer une traverse anti-roulis dans un essieu de véhicule. Dans ce cas, le tube extérieur de la traverse a une extrémité qui, en service, est reliée à un premier bras de roue sur un côté du véhicule, tandis que le tube intérieur de la traverse a une extrémité qui, en service, est reliée à un second bras de roue sur le côté opposé du véhicule. Les tubes intérieur et extérieur de la traverse anti-roulis sont accouplés l'un à l'autre par deux pièces annulaires d'accouplement espacées dans le sens longitudinal de ladite traverse.

D'autres caractéristiques et avantages de l'invention ressortiront mieux au cours de la description suivante d'un mode de réalisation donné à titre d'exemple en référence aux dessins annexés sur lesquels :
- la figure 1 est une vue schématique en plan, avec des parties représentées en coupe, montrant un essieu de véhicule dans lequel le procédé selon l'invention peut être mis en oeuvre pour la fabrication, l'assemblage et la fixation de certains des éléments de l'essieu ;
- la figure 2 est une vue en coupe montrant, à plus grande échelle que la figure 1, un ensemble comportant un tube métallique intérieur, un tube métallique extérieur et, entre les deux tubes représentés seulement partiellement, une pièce annulaire d'accouplement en matériau élastomérique, pour l'accouplement des deux tubes, l'ensemble étant représenté dans un état où la pièce annulaire d'accouplement a été mise en place entre les deux tubes, mais n'a pas encore été fixée à ceux-ci ;
- la figure 3 est une vue semblable à la figure 2, montrant l'ensemble susmentionné dans un état final, c'est-à-dire après fixation de la pièce annulaire d'accouplement aux deux tubes.

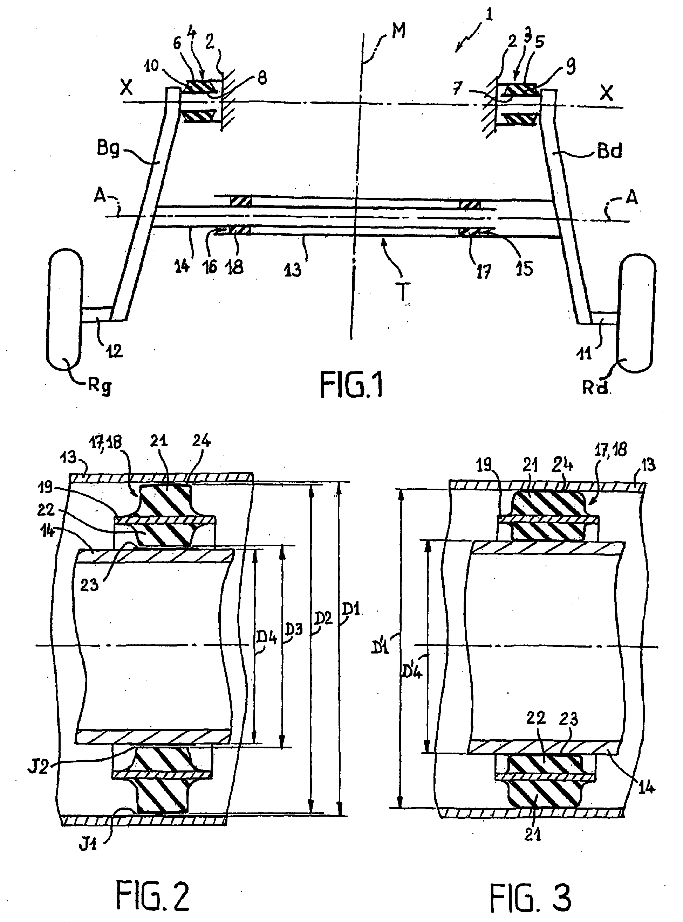

En se reportant à la figure 1, on peut voir un essieu 1, destiné à être monté sur la caisse 2 d'un véhicule. L'essieu 1 comporte une traverse anti-roulis T, reliant deux bras de suspension ou bras de roue Bd et Bg situés respectivement sur le côté droit et sur le côté gauche de la caisse 2 du véhicule.

Chacun des deux bras Bd et Bg est relié à la caisse 2 du véhicule par un dispositif 3 ou 4 jouant, de façon connue, à la fois le rôle d'une articulation élastique et d'une suspension élastique. Chacun des deux dispositifs d'articulation et de suspension élastiques 3 ou 4 comprend un tube métallique extérieur 5 ou 6, un tube métallique intérieur 7 ou 8 et une pièce annulaire d'accouplement 9 ou 10 qui est disposée entre les tubes 5 et 7 ou les tubes 6 et 8 et liée à ceux-ci. Les deux tubes 7 et 8 sont fixés respectivement aux bras Bd et Bg par exemple par soudage. Les deux tubes 5 et 6 sont fixés, par exemple par soudage, chacun à une bride (non montrée) qui est elle-même fixée à la caisse 2 par exemple par boulonnage. Après fixation des tubes 5 et 6 à la caisse 2, chacun des deux tubes 7 et 8 définit un axe d'articulation, c'est-à-dire un axe de débattement du bras correspondant Bd ou Bg par rapport à la caisse 2, les deux axes d'articulation, au repos, étant alignés suivant un même axe transversal X-X du véhicule.

A leur extrémité opposée au dispositif d'articulation et de suspension 3 ou 4, chacun des deux bras Bd et Bg porte une fusée 11 ou 12, qui est dirigée vers l'extérieur et qui porte une roue Rd ou Rg du véhicule. Dans l'exemple représenté sur la figure 1, l'essieu 1 est un essieu arrière et les bras Bd et Bg sont des bras tirés, c'est-à-dire que leur axe d'articulation X-X est situé en avant de l'axe de rotation des roues Rd et Rg. Cependant, l'invention pourrait aussi être mise en oeuvre dans un essieu où les bras de suspension sont des bras poussés.

La traverse anti-roulis T de l'essieu 1 comporte un premier tube ou tube extérieur 13, dont une extrémité est fixée, par exemple par soudage, au bras Bd et qui s'étend en direction de l'autre bras Bg. La traverse anti-roulis T comporte en outre un second tube ou tube intérieur 14, de plus petit diamètre que le tube 13, dont l'une des extrémités est fixée par exemple par soudage au bras Bg et qui s'étend vers le bras Bd en étant engagée partiellement dans le tube 13. Les deux tubes 13 et 14 sont en métal, par exemple en acier, mais ils pourraient aussi être en d'autres matériaux, par exemple en matériau composite. Les deux tubes 13 et 14, en position de repos, admettent un même axe A-A parallèle à l'axe d'articulation X-X des bras Bd et Bg et décalé vers les roues Rd et Rg, c'est-à-dire vers l'arrière par rapport à l'axe X-X. Dans l'exemple représenté sur la figure 1, l'axe A-A se trouve sensiblement à mi-distance entre l'axe X-X et les fusées 11 et 12. Cependant, en variante, l'axe A-A pourrait se trouver plus près de l'axe X-X, voire confondu avec celui-ci ou décalé plus loin vers l'arrière, par exemple de façon à être aligné avec les fusées 11 et 12, ou encore plus loin vers l'arrière, au-delà des fusées 11 et 12, si les bras Bd et Bg sont prolongés au-delà de celles-ci.

Les deux tubes 13 et 14 de la traverse anti-roulis T sont accouplés l'un à l'autre par deux pièces annulaires d'accouplement 15 et 16, encore appelées articulations, en matériau élastomérique, qui sont espacées l'une de l'autre suivant la direction de l'axe A-A. Chacune des deux pièces d'accouplement 15 et 16 est constituée par une bague 17 ou 18, en matériau élastomérique, qui est liée sans possibilité de glissement, en rotation comme en translation, aux deux tubes 13 et 14. Le procédé de fixation des bagues 17 et 18 aux deux tubes 13 et 14 sera décrit en détail plus loin.

Chacune des deux bagues 17 et 18 a une raideur radiale propre, qui peut être différente selon les différentes directions radiales pour tenir compte des amplitudes des efforts en déformation qui, en service, peuvent varier selon ces directions. Par exemple, la raideur radiale peut être différente dans la direction verticale, horizontale ou à 45°. Ceci peut être obtenu avec une bague élastique ayant une forme asymétrique, par exemple une forme semblable à celle de l'articulation élastique décrite dans le document WO 02/09960, ou en formant des alvéoles réparties dans le matériau élastomérique de la bague, par exemple comme décrit dans le document EP 0 956 984.

De préférence, les deux bagues 17 et 18 ont des raideurs radiales telles que les deux bagues, affectées chacune d'un coefficient proportionnel à leur raideur radiale, admettent un barycentre qui est plus proche du bras de roue Bd relié au tube extérieur 13 de la traverse T que de l'autre bras de roue Bg, comme décrit dans le document WO 01/70527. En outre, bien que dans l'exemple représenté sur la figure 1 les deux bagues 17 et 18 sont disposées symétriquement par rapport au plan médian longitudinal M du véhicule, les deux bagues 17 et 18 peuvent être disposées de telle sorte que leur centre géométrique soit décalé du côté du bras Bd relié au tube extérieur 13 de la traverse T, comme cela est également décrit dans le document WO 01/70527.

En se reportant aux figures 2 et 3, on va maintenant décrire le procédé de fixation des bagues 17 et 18 aux tubes 13 et 14. Les deux bagues 17 et 18 sont tout d'abord préfabriquées par moulage et vulcanisation pour leur donner la forme voulue et les dimensions voulues. Les deux bagues 17 et 18 sont réalisées en un matériau élastomérique tel que le caoutchouc, sans aucune armature métallique intérieure ou extérieure. Cependant, si on le désire, chacune des deux bagues 17 et 18 peut comporter au moins une armature interne, par exemple une armature interne 19 comme montré dans les figures 2 et 3. L'armature interne 19 peut être par exemple constituée par une bague 19 en métal ou autre matériau rigide, simple ou composite. L'armature interne 19 est noyée dans le matériau élastomérique de la bague 17 ou 18 lors du moulage de cette dernière. Dans ce cas, chaque bague 17 ou 18 comporte une région annulaire extérieure 21 et une région annulaire intérieure 22, toutes deux en matériau élastomérique, situées de part et d'autre de l'armature interne 19 et liées rigidement à celle-ci. Les deux régions annulaires 21 et 22 peuvent être faites dans le même matériau élastomérique, ou dans des matériaux élastomériques différents.

Que les bagues 17 et 18 soient entièrement en matériau élastomérique ou qu'elles soient composées de deux ou un plus grand nombre de régions annulaires en matériau élastomérique avec une ou plusieurs armatures internes interposées entre lesdites régions annulaires, les deux bagues 17 et 18 sont formées de manière à présenter un diamètre extérieur D2 légèrement plus petit que le diamètre intérieur D1 du tube 13, et un diamètre intérieur D3 légèrement plus grand que le diamètre extérieur D4 du tube 14. La différence des diamètres D1 et D2 et la différence des diamètres D3 et D4 sont telles que, après mise en place des bagues 17 et 18 autour du tube 14 et après mise en place du tube 14 portant lesdites bagues dans le tube 13, il existe un faible jeu J1 entre la surface périphérique extérieure des bagues 17 et 18 et la surface périphérique intérieure du tube 13, et un faible jeu J2 entre la surface périphérique intérieure des bagues 17 et 18 et la surface périphérique extérieure du tube 14. Dans la figure 2, la grandeur des jeux J1 et J2 a été exagérée pour la clarté du dessin. Cependant, en pratique, le jeu J1 pourra avoir une valeur d'environ 0,2 à 0,3 mm et le jeu J2 pourra avoir une valeur d'environ 0,1 mm.

Chaque bague 17 ou 18 a une surface périphérique intérieure de forme cylindrique. Bien que la surface périphérique extérieure de chaque bague 17 ou 18 pourrait avoir aussi une forme cylindrique, elle a de préférence une forme en tonneau ou une forme bi-conique comme montré dans la figure 2. Ainsi, chaque bague 17 ou 18 présente, à chacune des extrémités de la région annulaire extérieure 21, un diamètre légèrement plus petit que le diamètre D2. Dans ce cas, le diamètre extérieur D2 de la bague 17 ou 18 est le diamètre a mi-longueur de la région annulaire extérieure 21. Chacune des deux parties coniques de la surface périphérique extérieure de la bague 17 ou 18 peut avoir par exemple un angle de dépouille d'environ 1°.

Après avoir été moulées et vulcanisées, les deux bagues 17 et 18 sont de préférence soumises à une opération de nettoyage ou de dégraissage afin d'éliminer toutes traces de produit gras susceptible d'être présent sur leurs surfaces périphériques intérieure et extérieure, pour donner auxdites surfaces un état de surface apte à assurer une bonne adhérence de la colle qui sera ensuite utilisée pour la fixation des bagues 17 et 18 aux tubes 13 et 14. Cette opération de nettoyage peut être par exemple une opération de rectification à la meule. Dans ce cas, l'opération de rectification à la meule peut servir non seulement à dégraisser les surfaces périphériques extérieure et intérieure des bagues 17 et 18, mais aussi à donner auxdites surfaces les diamètres désirés D2 et D3 et, pour ce qui concerne la surface périphérique extérieure, la forme bi-conique désirée. En variante, si les diamètres désirés et les formes désirées ont été donnés aux surfaces périphériques extérieure et intérieure des bagues 17 et 18 lors de leur moulage, l'opération susmentionnée de dégraissage peut être effectuée au moyen d'un solvant approprié.

De même, la surface périphérique intérieure du tube 13 et la surface périphérique extérieure du tube 14 peuvent être soumises à une opération de dégraissage, par exemple à une opération de rectification à la meule, pour donner à leurs surfaces périphériques, respectivement intérieure et extérieure, un état de surface apte à assurer une bonne adhérence à la colle. En outre, les deux tubes 13 et 14 sont de préférence soumis à un traitement de surface contre la corrosion. Cette dernière opération peut être effectuée par exemple par cataphorèse, zincage, galvanisation, etc.

Ensuite, une couche 23 de colle, par exemple une colle à base de cyanoacrylate, est déposée tout autour sur la surface périphérique extérieure du tube 14 aux deux emplacements désirés pour la fixation des bagues 17 et 18, et une autre couche 24 de ladite colle est déposée tout autour sur la surface périphérique extérieure de chacune des deux bagues 17 et 18. En variante, la colle pourrait être déposée sur la surface périphérique intérieure de chacune des deux bagues 17 et 18 et sur la surface périphérique intérieure du tube 13 aux emplacements désirés pour la fixation des deux bagues 17 et 18. Selon une autre variante, la colle pourrait être déposée à la fois sur les surfaces périphériques intérieure et extérieure des deux bagues 17 et 18, sur la surface périphérique extérieure du tube 14 et sur la surface périphérique intérieure du tube 13.

Ensuite, les deux bagues 17 et 18 sont positionnées aux emplacements désirés sur la surface périphérique extérieure du tube 14, là où les couches 23 de colle ont été préalablement déposées. Cette opération de positionnement peut être effectuée soit en enfilant successivement chacune des deux bagues 17 et 18 autour du tube 14 maintenu fixe, jusqu'à ce que chaque bague occupe l'emplacement désiré, soit en maintenant les deux bagues 17 et 18 avec un espacement désiré dans un support fixe et en enfilant le tube 14 successivement dans les deux bagues jusqu'à ce que celles-ci occupent les emplacements désirés sur la surface périphérique extérieure du tube 14.

Ensuite, le tube 14 est soumis à une opération de dudgeonnage, au moyen de laquelle le tube 14 est expansé radialement sur toute sa circonférence, par déformation plastique. Le tube 14 peut être dudgeonné sur toute sa longueur ou, de préférence, seulement localement, c'est-à-dire dans des zones situées en correspondance avec les deux bagues 17 et 18. Le dudgeonnage peut être effectué seulement partiellement, c'est-à-dire de façon à obtenir une déformation plastique radiale en quantité suffisante pour que, dans la zone désirée de fixation, la surface périphérique extérieure du tube 14 soit appliquée fermement contre la surface périphérique intérieure de la bague 17 ou 18, sans provoquer une augmentation du diamètre extérieur D2 de ladite bague.

Toutefois, dans le cas où les bagues 17 et 18 comportent au moins une armature interne, comme l'armature 19, l'opération de dudgeonnage peut être effectuée en totalité, c'est-à-dire de façon à obtenir une déformation plastique radiale en quantité suffisante pour que le matériau élastomérique de la région annulaire intérieure 22 de chaque bague 17 ou 18 soit soumise à un taux de compression désiré. En effet, dans ce cas, la présence de l'armature 19 empêche que l'opération de dudgeonnage provoque une augmentation du diamètre extérieur D2 de la bague 17 ou 18, augmentation qui gênerait ensuite l'introduction des bagues 17 et 18 dans le tube 13. Le taux de compression est choisi en fonction de la raideur désirée et de l'endurance désirée pour la région annulaire intérieure 22 de la bague 17 ou 18, compte tenu des efforts maximaux susceptibles de transiter en service entre le tube 14 et ladite région annulaire 22. L'opération susmentionnée de dudgeonnage, partielle ou totale, permet d'éviter que les bagues 17 et 18 ne soient accidentellement déplacées par rapport au tube 14 lors des opérations ultérieures de manutention du tube 14, lors de l'opération d'enfilage du tube 14 dans le tube 13 et lors de la fixation du tube 13 aux deux bagues 17 et 18 comme cela va maintenant être décrit.

Ensuite, le tube 14, portant les deux bagues 17 et 18, et le tube 13 sont enfilés l'un dans l'autre jusqu'à ce que les deux bagues 17 et 18 soient positionnées aux emplacements désirés le long de la surface périphérique intérieure du tube 13. Ensuite, le tube 13 est soumis à une opération de rétreint au cours de laquelle le tube 13 est contracté radialement sur toute sa circonférence, par déformation plastique. Le tube 13 peut être rétreint sur la majeure partie de sa longueur ou, de préférence, seulement localement, c'est-à-dire dans ses zones situées respectivement en correspondance avec les bagues 17 et 18. L'opération de rétreint peut être conduite de manière à obtenir une contraction du tube 13 en quantité juste suffisante pour que, dans les zones de fixation, la surface périphérique intérieure du tube 13 soit appliquée fermement contre la surface périphérique extérieure de chacune des bagues 17 et 18 mais que le matériau élastomérique des bagues 17 et 18 soit très peu comprimé. Cependant, afin d'augmenter l'endurance de la fixation des bagues 17 et 18 au tube 13, l'opération de rétreint est de préférence conduite de manière à contracter le tube 13 en quantité suffisante pour que le matériau élastomérique de chacune des bagues 17 et 18 ou, si l'armature interne 19 est prévue, seulement le matériau élastomérique de la zone annulaire extérieure 21 de chacune desdites bagues, soit soumis à un taux de compression désiré.

Après l'opération de rétreint du tube 13 et après la prise de la colle formant les deux couches 23 et 24, les deux bagues 17 et 18 sont fermement liées aux tubes 13 et 14. L'ensemble composé des tubes 13 et 14 et des bagues 17 et 18 présente alors l'aspect représenté dans la figure 3. En comparant les figures 2 et 3, on peut voir que, au moins dans la zone de chacune des deux bagues 17 et 18, le tube 13 a maintenant un diamètre intérieur D'1 plus petit que le diamètre extérieur initial D2 des bagues 17 et 18, et que le tube 14 a maintenant un diamètre extérieur D'4 plus grand que le diamètre intérieur initial D3 des bagues 17 et 18, de sorte que le matériau élastomérique de la région annulaire extérieure 21 et de la région annulaire intérieure 22 des bagues 17 et 18 est comprimé. Exemple :

Les deux tubes 13 et 14 sont réalisés en acier. Avant rétreint, le tube 13 a un diamètre extérieur de 91,9 mm et une épaisseur de paroi de 2,45 mm, donc un diamètre intérieur D1 de 87 mm. Avant dudgeonnage, le tube 14 a un diamètre intérieur de 46,3 mm et une épaisseur de paroi de 3,5 mm, donc un diamètre extérieur D4 de 53,3 m. Après dudgeonnage, le tube 14 a un diamètre intérieur de 49 mm, donc un diamètre extérieur D'4 de 56 mm. Après rétreint, le tube 13 a un diamètre extérieur de 88,6 mm, donc un diamètre intérieur D'1 de 83,7 mm.

Chacune des deux bagues 17 et 18 comporte une armature interne 19 en acier et deux régions annulaires 21 et 22, respectivement intérieure et extérieure, en caoutchouc. L'armature interne 19, de forme générale cylindrique, a un diamètre extérieur de 70 mm et une épaisseur de paroi de 2,1 mm. Au repos, c'est-à-dire avant que les bagues 17 et 18 soient fixées entre les deux tubes 13 et 14, la région annulaire extérieure 21 de chaque bague a un diamètre extérieur D2 de 86,7 mm et la région annulaire intérieure 22 a un diamètre intérieur D3 de 53,4 mm.

Dans ces conditions, après que les bagues 17 et 18 ont été fixées entre les deux tubes 13 et 14 par le procédé décrit plus haut, le taux de compression du caoutchouc de chacune des deux régions annulaires 21 et 22 est d'environ 20 %. Le taux de compression est usuellement exprimé comme étant la variation en pour-cent de la section transversale, perpendiculairement à l'axe A-A, de la zone annulaire de caoutchouc concernée, avant et après compression [section = π(R²ₑₓₜ-R²ᵢₙₜ), Rₑₓₜ et Rᵢₙₜ étant les rayons extérieur et intérieur de la zone annulaire de caoutchouc concernée].

Dans l'exemple de réalisation décrit plus haut, après l'étape d'encollage, le tube intérieur 14 était tout d'abord enfilé dans les bagues 17 et 18 en matériau élastomérique, puis le tube 14 était soumis éventuellement à une opération de dudgeonnage partiel ou total, et ensuite le tube 14 portant les bagues 17 et 18 était enfilé dans le tube extérieur 13 et ce dernier était soumis à une opération de rétreint. Dans une variante de réalisation du procédé selon l'invention, après l'étape d'encollage, les bagues peuvent être enfilées et positionnées aux emplacements désirés dans le tube extérieur 13, puis celui-ci peut être éventuellement soumis à une opération de rétreint partiel ou total, puis le tube intérieur peut être enfilé dans les bagues 17 et 18 et enfin soumis à une opération de dudgeonnage.

Dans une autre variante de réalisation du procédé selon l'invention, après l'étape d'encollage, les bagues 17 et 18 peuvent être enfilées sur le tube intérieur 14 ou dans le tube extérieur 13, puis, selon le cas, le tube intérieur 14 portant les bagues 17 et 18 est enfilé dans le tube extérieur 13, ou le tube extérieur 13 portant les bagues 17 et 18 à l'intérieur est enfilé sur le tube intérieur 14, et enfin le tube intérieur 14 et le tube extérieur 13 sont soumis en même temps respectivement à une opération de dudgeonnage et à une opération de rétreint.

Dans le cas où chaque bague 17, 18 comporte une ou plusieurs armatures internes telles que la bague 19, cette bague 19 n'est pas nécessairement continue sur toute sa circonférence, mais elle peut comporter par exemple une ou plusieurs fentes longitudinales de telle sorte qu'elle soit aisément déformable radialement lors de l'opération de dudgeonnage du tube intérieur 14 et/ou lors de l'opération de rétreint du tube extérieur 13.

Dans la description qui précède, on a décrit un procédé pour fixer les bagues élastiques 17 et 18 entre les deux tubes 13 et 14 de la traverse anti-roulis T de la figure 1. Toutefois, un procédé semblable à celui décrit ci-dessus pourrait être aussi utilisé pour fixer la bague élastique 9 entre les deux tubes 5 et 7 du dispositif d'articulation élastique 3 et la bague élastique 10 entre les deux tubes 6 et 8 du dispositif d'articulation élastique 4 de l'essieu 1 de la figure 1.

Il est aussi possible d'utiliser seulement une partie du procédé selon l'invention, par exemple pour fixer les bagues 17 et 18 au tube extérieur 13 de la traverse anti-roulis T ou pour fixer les bagues élastiques 9 et 10 respectivement aux tubes extérieurs 5 et 6 des dispositifs d'articulation élastiques 3 et 4. Dans ce cas, par exemple, les deux bagues 17 et 18 peuvent être tout d'abord formées par moulage, vulcanisées et fixées au tube 14 par une technique d'adhérisation connue, en une seule opération. Dans ce cas, le moulage et la vulcanisation des deux bagues peuvent être effectués relativement aisément en raison de l'absence du tube extérieur 13. Par cette opération de moulage ou par une opération ultérieure de rectification à la meule, il est donné à la surface périphérique extérieure des bagues 17 et 18 un diamètre extérieur D2 légèrement plus petit que le diamètre intérieur D1 du tube 13. Ensuite, la couche 24 de colle est déposée sur la surface périphérique extérieure des deux bagues 17 et 18 et/ou sur la surface périphérique intérieure du tube 13. Ensuite, le tube 14, portant les deux bagues 17 et 18, est introduit dans le tube 13 jusqu'à ce que les deux bagues 17 et 18 soient positionnées aux emplacements désirés le long de la surface périphérique intérieure du tube 13. Ensuite, ce dernier est fixé aux deux bagues 17 et 18 par une opération de rétreint du tube 13 et/ou par une opération de dudgeonnage du tube 14 (si les bagues 17 et 18 ne comportent pas d'armature interne rigide 19), d'une manière semblable à celle décrite plus haut en référence aux figures 2 et 3.

## Revendications

1. Procédé de fixation d'au moins une pièce annulaire d'accouplement (15, 16) en matériau élastomérique entre un tube extérieur (13) et un tube intérieur (14) disposés l'un dans l'autre, le tube extérieur (13) ayant un diamètre intérieur d'une première valeur (D1) et le tube intérieur (14) ayant un diamètre extérieur d'une seconde valeur (D4) plus petite que la première valeur, **caractérisé par** les étapes consistant :
a) à former en tant que pièce annulaire d'accouplement (15, 16), une bague (17, 18) comportant des régions annulaires, extérieure (21) et intérieure (22), entièrement en matériau élastomérique, la région annulaire extérieure (21) ayant un diamètre extérieur (D2) plus petit que la première valeur (D1) ;
b) à encoller au moins une surface (24) parmi une première paire de surfaces à joindre comprenant la surface périphérique intérieure du tube extérieur (13) et la surface périphérique extérieure de ladite région annulaire extérieure (21) de la bague (17, 18) ;
c) à enfiler le tube intérieur (14), portant la bague (17, 18), et le tube extérieur (13) l'un dans l'autre jusqu'à ce que la bague soit positionnée à un emplacement désiré le long de la surface périphérique intérieure dudit tube extérieur ; et
d) à soumettre au moins un desdits tubes intérieur (14) et extérieur (13) à une déformation plastique radiale, sur toute la circonférence du tube soumis à déformation, la déformation étant effectuée dans un sens propre à appliquer fermement l'une contre l'autre les surfaces à joindre de ladite première paire de surfaces.

2. Procédé selon la revendication 1, **caractérisé en ce que**, dans l'étape d), la déformation plastique radiale est effectuée en quantité suffisante pour que le matériau élastomérique de la bague (17, 18) soit soumis à un taux de compression désiré après fixation de la bague aux deux tubes (13 et 14).

3. Procédé selon la revendication 1 ou 2, **caractérisé en ce que**, dans l'étape d), la déformation plastique radiale est effectuée localement en correspondance avec ladite bague (17, 18).

4. Procédé selon l'une quelconque des revendications 1 à 3, **caractérisé en ce que** :
- dans l'étape a), la région annulaire intérieure de la bague (17, 18) est formée de manière à avoir un diamètre intérieur (D3) plus grand que la seconde valeur (D4) ;
- dans l'étape b), une colle est appliquée aussi sur au moins une surface (23) parmi une seconde paire de surfaces à joindre comprenant la surface périphérique extérieure du tube intérieur (14) et la surface périphérique intérieure de ladite région annulaire intérieure (22) de la bague (17, 18) ;
- après l'étape b) et avant l'étape c), le tube intérieur (14) et la bague (17, 18) sont enfilés l'un dans l'autre jusqu'à ce que la bague soit positionnée à un emplacement désiré sur la surface périphérique extérieure dudit tube intérieur.

5. Procédé selon la revendication 4, **caractérisé en ce que**, préalablement à l'étape b), les surfaces périphériques intérieure et extérieure de la bague (17, 18) sont préparées par une opération de rectification à la meule pour donner auxdites surfaces périphériques un état de surface apte à assurer une bonne adhérence de la colle utilisée dans l'étape b).

6. Procédé selon la revendication 4 ou 5, **caractérisé en ce que**, après l'étape d'enfilage du tube intérieur (14) et de la bague (17, 18) l'un dans l'autre et préalablement à l'étape c), le tube intérieur (14) est soumis à une opération de dudgeonnage pour faire adhérer l'une à l'autre les surfaces à joindre de ladite seconde paire de surfaces.

7. Procédé selon la revendication 6, **caractérisé en ce que** l'opération de dudgeonnage est effectuée localement en correspondance avec ladite bague (17, 18).

8. Procédé selon l'une quelconque des revendications 1 à 3, **caractérisé en ce que** l'étape a) de formation de ladite bague (17, 18) consiste à mouler, vulcaniser et adhériser, en une seule opération, ladite bague directement sur la surface périphérique extérieure du tube intérieur (14).

9. Procédé selon la revendication 8, **caractérisé en ce que** préalablement à l'étape b), la surface périphérique extérieure de la bague (17, 18) est préparée par une opération de rectification à la meule pour donner à ladite surface périphérique extérieure de la bague un état de surface apte à assurer une bonne adhérence de la colle utilisée dans l'étape b).

10. Procédé selon l'une quelconque des revendications 1 à 9, **caractérisé en ce que**, préalablement à l'étape b), les tubes intérieur (14) et extérieur (13) sont soumis à un traitement de surface contre la corrosion.

11. Procédé selon l'une quelconque des revendications 1 à 10, **caractérisé en ce que** ladite bague (17, 18) est entièrement faite d'un matériau élastomérique.

12. Procédé selon l'une quelconque des revendications 1 à 10, **caractérisé en ce que** dans l'étape a) de formation de ladite bague (17, 18), au moins une armature (19) est noyée dans le matériau élastomérique entre lesdites régions annulaires extérieure (21) et intérieure (22).

13. Procédé selon la revendication 12, **caractérisé en ce que**, dans l'étape d), le tube intérieur (14) est soumis à une opération de dudgeonnage et le tube extérieur (13) est soumis à une opération de rétreint.

14. Procédé selon l'une quelconque des revendications 1 à 13, **caractérisé en ce que** pour l'étape b), on utilise une colle à base de cyanoacrylate.

15. Ensemble comprenant un tube extérieur (13) et un tube intérieur (14) disposés au moins partiellement l'un dans l'autre et accouplés l'un à l'autre par au moins une pièce annulaire d'accouplement (15, 16) en matériau élastomérique, qui est fixée à la surface périphérique intérieure du tube extérieur (13) et à la surface périphérique extérieure du tube intérieur (14) par des liaisons empêchant tout glissement relatif entre ladite pièce annulaire d'accouplement et lesdits tubes intérieur et extérieur, **caractérisé en ce que** ladite pièce annulaire d'accouplement (15, 16) est fixée aux deux tubes (13 et 14) par le procédé selon l'une quelconque des revendications 1 à 14.

16. Ensemble selon la revendication 15, **caractérisé en ce qu'**il fait partie d'un dispositif d'articulation et de suspension élastique (3 ou 4) pour un bras de roue (Bd ou Bg) d'un véhicule.

17. Ensemble selon la revendication 15, **caractérisé en ce qu'**il constitue une traverse anti-roulis (T) dans un essieu (1) de véhicule, le tube extérieur (13) ayant une extrémité reliée à un premier bras de roue (Bd) sur un côté du véhicule et le tube intérieur (14) ayant une extrémité reliée à un second bras de roue (Bg) sur le côté opposé du véhicule.

18. Ensemble selon la revendication 17, **caractérisé en ce que** les tubes intérieur (14) et extérieur (13) de la traverse anti-roulis (T) sont accouplés par deux pièces annulaires d'accouplement (15, 16) espacées dans le sens longitudinal de ladite traverse.

## Patentansprüche

1. Verfahren zur Befestigung mindestens eines ringförmigen Kupplungsteils (15, 16) aus Elastomermaterial zwischen einem äußeren Rohr (13) und einem inneren Rohr (14), die ineinander angeordnet sind, wobei das äußere Rohr (13) einen Innendurchmesser von einem ersten Wert (D1) und das innere Rohr (14) einen Außendurchmesser von einem zweiten Wert (D4) aufweist, der kleiner ist als der erste Wert, **dadurch gekennzeichnet, dass** es die folgenden Schritte aufweist:
a) Bilden eines Rings (17, 18) aus dem ringförmigen Kupplungsteil (15, 16), der einen äußeren ringförmigen Bereich (21) und einen inneren ringförmigen Bereich (22) aufweist und vollständig aus Elastomermaterial besteht, wobei der äußere ringförmige Bereich (21) einen Außendurchmesser (D2) aufweist, der kleiner ist als der erste Wert (D 1);
b) Auftragen von Klebstoff auf mindestens eine Fläche (24) aus einem ersten Paar zu verbindender Flächen, bestehend aus der inneren peripherischen Fläche des äußeren Rohrs (13) und der äußeren peripherischen Fläche des äußeren ringförmigen Bereichs (21) des Rings (17, 18);
c) Ineinanderfügen des inneren Rohrs (14), das den Ring (17, 18) trägt, und des äußeren Rohrs (13), bis der Ring an einer gewünschten Stelle an der Länge der inneren peripherischen Fläche des äußeren Rohrs positioniert ist; und
d) radiale plastische Verformung des inneren Rohrs (14) und/oder des äußeren Rohrs (13) über den gesamten Umfang des der Verformung ausgesetzten Rohrs, wobei die Verformung in einer Richtung ausgeübt wird, die bewirkt, dass die zu verbindenden Flächen des ersten Paars an Flächen fest aneinander gedrückt werden.

2. Verfahren nach Anspruch 1, **dadurch gekennzeichnet, dass** die radiale plastische Verformung in Schritt d) ausreichend stark ist, dass das Elastomermaterial des Rings (17, 18) nach Befestigung des Rings an den beiden Rohren (13 und 14) bis zu einem gewünschten Grad komprimiert wird.

3. Verfahren nach Anspruch 1 oder 2, **dadurch gekennzeichnet, dass** die radiale plastische Verformung in Schritt d) lokal in Übereinstimmung mit dem Ring (17, 18) durchgeführt wird.

4. Verfahren nach einem der Ansprüche 1 bis 3, **dadurch gekennzeichnet, dass**
- in Schritt a) der innere ringförmige Bereich des Rings (17, 18) so gebildet wird, dass sein Innendurchmesser (D3) größer ist als der zweite Wert (D4);
- in Schritt b) ein Klebstoff auch auf mindestens eine Fläche (23) aus einem zweiten Paar zu verbindender Flächen aufgetragen wird, bestehend aus der äußeren peripherischen Fläche des inneren Rohrs (14) und der inneren peripherischen Fläche des inneren ringförmigen Bereichs (22) des Rings (17, 18);
- nach Schritt b) und vor Schritt c) das innere Rohr (14) und der Ring (17, 18) ineinander gefügt werden, bis der Ring an einer gewünschten Stelle an der äußeren peripherischen Fläche des inneren Rohrs positioniert ist.

5. Verfahren nach Anspruch 4, **dadurch gekennzeichnet, dass** vor Schritt b) die innere peripherische und die äußere peripherische Fläche des Rings (17, 18) durch einen Schleifvorgang vorbereitet werden, um ihnen einen Oberflächenzustand zu verleihen, der eine gute Haftung des in Schritt b) verwendeten Klebstoffs erlaubt.

6. Verfahren nach Anspruch 4 oder 5, **dadurch gekennzeichnet, dass** nach dem Schritt des Ineinanderfügens des inneren Rohrs (14) und des Rings (17, 18) und vor Schritt c) das innere Rohr (14) eingewalzt wird, damit die zu verbindenden Flächen des zweiten Paars an Flächen aneinander haften.

7. Verfahren nach Anspruch 6, **dadurch gekennzeichnet, dass** das Einwalzen lokal in Übereinstimmung mit dem Ring (17, 18) durchgeführt wird.

8. Verfahren nach einem der Ansprüche 1 bis 3, **dadurch gekennzeichnet, dass** der Schritt a) der Bildung des Rings (17, 18) darin besteht, den Ring direkt auf der äußeren peripherischen Fläche des inneren Rohrs (14) zu formen, zu vulkanisieren und haftend zu machen.

9. Verfahren nach Anspruch 8, **dadurch gekennzeichnet, dass** vor Schritt b) die äußere peripherische Fläche des Rings (17, 18) durch einen Schleifvorgang vorbereitet wird, um ihr einen Oberflächenzustand zu verleihen, der eine gute Haftung des in Schritt b) verwendeten Klebstoffs erlaubt.

10. Verfahren nach einem der Ansprüche 1 bis 9, **dadurch gekennzeichnet, dass** das innere Rohr (14) und das äußere Rohr (13) vor Schritt b) einer Oberflächenbehandlung gegen Korrosion unterzogen werden.

11. Verfahren nach einem der Ansprüche 1 bis 10, **dadurch gekennzeichnet, dass** der Ring (17, 18) vollständig aus Elastomermaterial besteht.

12. Verfahren nach einem der Ansprüche 1 bis 10, **dadurch gekennzeichnet, dass** in Schritt a) der Bildung des Rings (17, 18) mindestens eine Bewehrung (19) zwischen dem äußeren ringförmigen Bereich (21) und dem inneren ringförmigen Bereich (22) im Elastomermaterial versenkt wird.

13. Verfahren nach Anspruch 12, **dadurch gekennzeichnet, dass** in Schritt d) das innere Rohr (14) einem Einwalzvorgang und das äußere Rohr (13) einem Querschnittsverminderungsvorgang unterzogen werden.

14. Verfahren nach einem der Ansprüche 1b bis 13, **dadurch gekennzeichnet, dass** für Schritt b) ein Klebstoff auf der Basis von Cyanacrylat verwendet wird.

15. Einheit aus einem äußeren Rohr (13) und einem inneren Rohr (14), die zumindest teilweise ineinander angeordnet und mittels eines ringförmigen Kupplungsteils (15, 16) aus Elastomermaterial aneinander gekoppelt sind, das an der inneren peripherischen Fläche des äußeren Rohrs (13) und an der äußeren peripherischen Fläche des inneren Rohrs (14) durch Verbindungen befestigt ist, die jedes relative Gleiten zwischen dem ringförmigen Kupplungsteil und dem inneren und dem äußeren Rohr verhindern, **dadurch gekennzeichnet, dass** das ringförmige Kupplungsteil (15, 16) durch das Verfahren nach einem der Ansprüche 1 bis 14 an den beiden Rohren (13 und 14) befestigt ist.

16. Einheit nach Anspruch 15, **dadurch gekennzeichnet, dass** es Teil einer Gelenk- und Federungsvorrichtung (3 oder 4) für einen Radarm (Bd oder Bg) eines Fahrzeugs ist.

17. Einheit nach Anspruch 15, **dadurch gekennzeichnet, dass** sie einen Querstabilisator (T) in einer Fahrzeugachse (1) bildet, wobei ein Ende des äußeren Rohrs (13) mit einem ersten Radarm (Bd) auf einer Seite des Fahrzeugs und ein Ende des inneren Rohrs (14) mit einem zweiten Radarm (Bg) auf der gegenüberliegenden Seite des Fahrzeugs verbunden ist.

18. Einheit nach Anspruch 17, **dadurch gekennzeichnet, dass** das innere Rohr (14) und das äußere Rohr (13) des Querstabilisators (T) durch zwei ringförmige Kupplungsteile (15, 16) gekoppelt sind, die in der Längsrichtung des Querträgers voneinander beabstandet sind.

## Claims

1. A method of fixing at least one annular coupling part (15, 16) of elastomeric material between an outer tube (13) and an inner tube (14) arranged one in the other, the outer tube (13) having an internal diameter of a first value (D1) and the inner tube (14) having an external diameter of a second value (D4) smaller than the first value, **characterised by** steps consisting of:
a) forming as annular coupling part (15, 16) a ring (17, 18) comprising annular regions, external (21) and internal (22), entirely of elastomeric material, the outer annular region (21) having an external diameter (D2) smaller than the first value (D1);
b) gluing at least one surface (24) of a first pair of surfaces to be joined comprising the inner peripheral surface of the outer tube (13) and the outer peripheral surface of said outer annular region (21) of the ring (17, 18);
c) slipping the inner tube (14), bearing the ring (17, 18), and the outer tube (13) into one another until the ring is positioned at a desired location along the inner peripheral surface of said outer tube; and
d) subjecting at least one of said inner (14) and outer (13) tubes to radial plastic deformation over the entire circumference of the tube subjected to deformation, the deformation being effected in a direction suitable for firmly applying the surfaces to be joined of said first pair of surfaces against one another.

2. A method according to Claim 1, **characterised in that**, in step d), the radial plastic deformation is effected in a sufficient quantity for the elastomeric material of the ring (17, 18) to be subjected to a desired amount of compression after the ring has been fixed to the two tubes (13 and 14).

3. A method according to Claim 1 or 2, **characterised in that**, in step d), the radial plastic deformation is effected locally corresponding with said ring (17, 18).

4. A method according to any one of Claims 1 to 3, **characterised in that**:
- in step a), the inner annular region of the ring (17, 18) is formed so as to have an internal diameter (D3) greater than the second value (D4);
- in step b), a glue is also applied to at least one surface (23) of a second pair of surfaces to be joined comprising the outer peripheral surface of the inner tube (14) and the inner peripheral surface of said inner annular region (22) of the ring (17, 18);
- after step b) and before step c), the inner tube (14) and the ring (17, 18) are slipped into one another until the ring is positioned at a desired location on the outer peripheral surface of said inner tube.

5. A method according to Claim 4, **characterised in that**, prior to step b), the inner and outer peripheral surfaces of the ring (17, 18) are prepared by a grinding operation to impart to said peripheral surfaces a surface state capable of ensuring good adhesion of the glue used in step b).

6. A method according to Claim 4 or 5, **characterised in that**, after the step of slipping the inner tube (14) and the ring (17, 18) into one another and prior to step c), the inner tube (14) is subjected to a tubular expansion operation to make the surfaces to be joined of said second pair of surfaces adhere to one another.

7. A method according to Claim 6, **characterised in that** the tubular expansion operation is effected locally corresponding with said ring (17, 18).

8. A method according to any one of Claims 1 to 3, **characterised in that** the step a) of forming said ring (17, 18) consists of moulding, vulcanising and bonding, in a single operation, said ring directly on the outer peripheral surface of the inner tube (14).

9. A method according to Claim 8, **characterised in that** prior to step b), the outer peripheral surface of the ring (17, 18) is prepared by a grinding operation to impart to said outer peripheral surface of the ring a surface state capable of ensuring good adhesion of the glue used in step b).

10. A method according to any one of Claims 1 to 9, **characterised in that**, prior to step b), the inner (14) and outer (13) tubes are subjected to anticorrosion surface treatment.

11. A method according to any one of Claims 1 to 10, **characterised in that** said ring (17, 18) is entirely made of an elastomeric material.

12. A method according to any one of Claims 1 to 10, **characterised in that** in the step a) of forming said ring (17, 18), at least one reinforcement (19) is embedded in the elastomeric material between said outer (21) and inner (22) annular regions.

13. A method according to Claim 12, **characterised in that**, in step d), the inner tube (14) is subjected to a tubular expansion operation and the outer tube (13) is subjected to a tubular contraction operation.

14. A method according to any one of Claims 1 to 13, **characterised in that** a cyanoacrylate-based glue is used for step b).

15. An assembly comprising an outer tube (13) and an inner tube (14) arranged at least in part one in the other and coupled to one another by at least one annular coupling part (15, 16) of elastomeric material, which is fixed to the inner peripheral surface of the outer tube (13) and to the outer peripheral surface of the inner tube (14) by connections which prevent any relative sliding between said annular coupling part and said inner and outer tubes, **characterised in that** said annular coupling part (15, 16) is fixed to the two tubes (13 and 14) by the method according to any one of Claims 1 to 14.

16. An assembly according to Claim 15, **characterised in that** it forms part of an elastic suspension and articulation device (3 or 4) for a wheel arm (Bd or Bg) of a vehicle.

17. An assembly according to Claim 15, **characterised in that** it constitutes an anti-roll crossmember (T) in a vehicle axle (1), the outer tube (13) having one end connected to a first wheel arm (Bd) on one side of the vehicle and the inner tube (14) having one end connected to a second wheel arm (Bg) on the opposite side of the vehicle.

18. An assembly according to Claim 17, **characterised in that** the inner (14) and outer (13) tubes of the anti-roll crossmember (T) are coupled by two annular coupling parts (15, 16) spaced in the longitudinal direction of said crossmember.
